# EUROPÄISCHE PATENTANMELDUNG

(11) **EP 4 159 649 A1**
(43) Veröffentlichungstag der Anmeldung: **05.04.2023**
(21) Anmeldenummer: 21200500.3
(22) Anmeldetag: 01.10.2021
(51) Int. Cl.: B65G 47/22, B65G 54/02, B65G 25/04

(54) **HANDLINGSVORRICHTUNG UND VERWENDUNG EINER HANDLINGSVORRICHTUNG**

(71) Anmelder: TT Innovation AG, 6300 Zug (CH)
(72) Erfinder: Tondera, Marc, 4125 Riehen (CH); Schneidler, Tobias Jan, 6332 Hagendorn (CH); Carli, Julia Annette, 4053 Basel (CH); Müller, Mathieu, 68510 Sierentz (FR); Leuenberger, Philipp, 4052 Basel (CH); Rethoret, Christophe, 68500 Issenheim (FR); Zeller, Mike, 4246 Wahlen (CH)
(74) Vertreter: Mertzlufft-Paufler, Cornelius

(57) **Zusammenfassung**

Die Erfindung schlägt allgemein eine Handlingsvorrichtung (1) vor, welche wenigstens zwei Gegenstandsaufnahmen (2) und wenigstens eine Verstelleinrichtung (3), mit der ein Abstand (4) zwischen den wenigstens zwei Gegenstandsaufnahmen (2) veränderbar ist, aufweist, wobei wenigstens eine Transporteinheit (5) an der Verstelleinrichtung (3) angreift, sodass der Abstand (4) zwischen den wenigstens zwei Gegenstandsaufnahmen (2) durch eine Bewegung der Transporteinheit (5) veränderbar ist (Figur 1).

## Beschreibung

Die Erfindung betrifft eine Handlingsvorrichtung aufweisend wenigstens zwei Gegenstandsaufnahmen und wenigstens eine Verstelleinrichtung, mit der ein Abstand zwischen den wenigstens zwei Gegenstandsaufnahmen veränderbar ist.

Handlingsvorrichtungen sind Vorrichtungen, die Materialien und/oder Gegenstände von oder zu einer Prozessposition bewegen können. Dabei können Handlingsvorrichtungen selbst Manipulationen an den Gegenständen durchführen. Es sind Handlingsvorrichtungen bekannt, die wenigstens zwei Gegenstände aufnehmen können und dabei den Abstand zwischen den wenigstens zwei Gegenständen verändern. Eine Abstandsänderung wird häufig im Zuge eines Umlagerungs- oder Befüllvorgangs von Gegenständen, beispielsweise von Vials und/oder Spritzen und/oder Karpullen und/oder Ampullen, vollzogen und spielt somit eine wichtige Rolle in der Prozessierung von Lebensmitteln, kosmetischen Produkten und Pharmazeutika.

Die durch Handlingsvorrichtungen durchgeführten Abstandsveränderungen werden durch Verstelleinrichtungen, zumeist durch einen Motor, beispielsweise durch einen Elektromotor, vollzogen, der mit wenigstens zwei Kurbeln verbunden ist, auf denen jeweils ein Gegenstand aufgenommen sein kann. Der Motor treibt die Bewegung der Kurbeln an, wodurch es zu einer relativen Abstandsänderung zwischen den Gegenständen kommt. Derartige Handlingsvorrichtungen sind zumeist stationär, was ihren Einsatzraum begrenzt und wodurch Wartungen erschwert werden, da die Wartungen zumeist ortsgebunden vollzogen werden müssen.

Die Erfindung betrifft weiterhin eine Verwendung einer Handlingsvorrichtung.

Aufgabe der Erfindung ist es, Handlingsvorrichtungen der eingangs beschrieben Art zu verbessern.

Zur Lösung der genannten Aufgabe sind erfindungsgemäß die Merkmale des Anspruchs 1 vorgesehen. Insbesondere wird somit zur Lösung der genannten Aufgabe bei einer Handlingsvorrichtung der eingangs beschriebenen Art erfindungsgemäß vorgeschlagen, dass wenigstens eine Transporteinheit an der Verstelleinrichtung angreift, sodass der Abstand zwischen den wenigstens zwei Gegenstandsaufnahmen durch eine Bewegung der Transporteinheit veränderbar ist.

Eine erfindungsgemäße Handlingsvorrichtung kann somit durch die Verwendung einer Transporteinheit eine Abstandsänderung verursachen, da die Transporteinrichtung an der Verstelleinrichtung angreift. Als "angreifen" kann beispielsweise eine kurzzeitige, wiederholende oder dauerhafte Kontaktierung der Transporteinheit an die Handlingsvorrichtungen gemeint sein. Somit kann eine Verstelleinrichtung vorteilhaft zur Übertragung der durch die Transporteinheit übermittelte Bewegungsenergie kostengünstig und variabel steuerbar konstruiert werden, was eine Handlingsvorrichtung verbessert.

Weiterhin kann eine Transporteinheit, insbesondere einer von der Handlingsvorrichtung separat gehaltenen Transporteinheit, im Falle eines Defekts oder während einer Wartung einfach durch eine weitere Transporteinheit funktionell ausgetauscht werden. Somit kann ein Betrieb der Handlingsvorrichtung weniger störanfällig realisiert werden, was von Vorteil ist.

Weiterhin kann von Vorteil sein, dass durch die Verwendung einer Transporteinheit zur Abstandsveränderung verschiedene Prozesse beschleunigt und/oder miteinander gekoppelt werden können.

Beispielsweise kann vorgesehen sein, dass sich die Transporteinheit bewegt und Gegenstände transportiert, an der Verstelleinrichtung angreift, um eine Abstandsänderung der wenigstens zwei Gegenstandsaufnahmen zu verursachen, und die transportierten Gegenstände für die Handlingsvorrichtung oder einer Prozessstation zur Weiterverarbeitung bereitstellt.

Von Vorteil ist auch, dass ein Transportprozess und ein Prozess der Abstandsänderung simultan ausgeführt werden können, wodurch eine Prozessdauer reduziert werden kann. Zusätzlich dazu könnte auch weniger Oberfläche in einem Prozessraum benötigt werden, da die beiden zuvor beschriebenen Prozesse durch eine Handlingsvorrichtung vollzogen werden könnten. Somit wäre die Gefahr einer Kontamination bzw. Partikelverschmutzung reduzierbar, was insbesondere in Reinräumen vorteilhaft ist.

Bei einer vorteilhaften Ausgestaltung der Erfindung kann vorgesehen sein, dass die Verstelleinrichtung mechanisch ist. Die Verwendung einer mechanischen Verstelleinrichtung kann noch kostengünstiger in Bezug auf Herstellung und Wartung der Handlingsvorrichtung realisiert werden. Bei einer mechanischen Verstelleinrichtung könnte weniger Material, wie beispielsweise Abdichtungen oder Kabel, verwendet werden, wodurch Abriebflächen und/oder potenzielle Leckagestellen verringert werden könnten. Ferner könnte eine Handlingsvorrichtung einfacher gewartet, gereinigt und sterilisiert werden.

So kann eine Verstelleinrichtung beispielsweise ohne Elektrobeziehungsweise Hydraulikelemente realisiert sein.

Alternativ oder zusätzlich kann vorgesehen sein, dass die Verstelleinrichtung während des Verstellens eines Abstands ihre Längsausdehnung verändert. Somit kann die Längsausdehnung einer Verstelleinrichtung in Abhängigkeit von einem Prozessraum beziehungsweise einer Prozess- oder Ruheposition der Verstelleinrichtung angepasst werden. Weiterhin von Vorteil bei einer Veränderung der Längsausdehnung könnte sein, dass der Bereich, in dem die Änderung eines Abstandes von wenigstens zwei Gegenstandsaufnahmen ausführbar ist, veränderbar realisiert werden kann.

Bei einer weiteren vorteilhaften Ausführungsform der Erfindung kann vorgesehen sein, dass die wenigstens eine Transporteinheit Teil der Handlingsvorrichtung ist. Somit kann eine Handlingsvorrichtung selbst beweglich realisiert werden, wodurch die Flexibilität der Handlingsvorrichtung verbessert wird.

Alternativ oder zusätzlich kann vorgesehen sein, dass die wenigstens eine Transporteinheit Teil eines Transportsystems ist. Als Transportsystem sind hier Systeme zu verstehen, welche aus wenigstens einer Transporteinheit bestehen, welche Gegenstände zwischen wenigstens zwei Orten, beispielsweise zwischen zwei Prozessstationen, bewegen können. Transportsysteme können stationär, also ortsgebunden, oder beweglich sein. Es ist auch denkbar, dass funktionale Teile des Transportsystems stationär sind, die oder eine Transporteinheit jedoch beweglich ausgebildet ist. Somit kann vorteilhaft ein Transport durch die oder eine Transporteinheit durchgeführt werden, ohne, dass das gesamte Transportsystem involviert sein muss.

Bei einer weiteren vorteilhaften Ausführungsform der Erfindung kann vorgesehen sein, dass die wenigstens eine Transporteinheit passiv oder aktiv ausgebildet ist. Somit kann bei einer Handlingsvorrichtung vorteilhaft zwischen einer passiven oder aktiven Transporteinheit gewechselt werden, was Handlingsvorrichtungen flexibler werden lässt. Unter passiv ist hier zu verstehen, dass sich die Transporteinheit während einer Abstandsänderung nicht eigenständig zwischen zwei Orten bewegen kann.

Bei einer weiteren vorteilhaften Ausführungsform der Erfindung kann vorgesehen sein, dass die wenigstens eine Transporteinheit ein Mover ist, der magnetisch an eine Statoranordnung gekoppelt und/oder in wenigstens einem Freiheitsgrad auf einer Antriebsfläche bewegbar ist. Vorteilhaft bei einem Mover ist die reibungslose Bewegung auf der Antriebsfläche, wodurch Materialabrieb der Transporteinheit vermindert oder gar verhindert werden kann.

Mover sind beispielsweise von dem Produkt XPlanar-Mover der Beckhoff Automation GmbH & Co. KG, Hülshorstweg 20, 33415 Verl bekannt.

Insbesondere in solchen Reinräumen ist die Verwendung eines Movers als Transporteinheit sehr vorteilhaft, da Partikelabrieb durch die Transporteinheit vermindert wird, wodurch wenige bis keine Reinigungsprozesse innerhalb des Reinraums durchgeführt werden müssten.

Alternativ kann der Mover in wenigstens zwei Freiheitsgraden auf der Antriebsfläche bewegbar sein, wodurch der Mover flexibler bewegt und benutzt werden kann.

Bei einer vorteilhaften Ausgestaltung der Erfindung kann vorgesehen sein, dass die Handlingsvorrichtung bewegbar ist. Somit kann sich die Handlingsvorrichtung vorteilhaft bewegen, insbesondere zwischen wenigstens zwei Prozessstationen. Auch für Wartungszwecke ist eine bewegbare Handlingsvorrichtung vorteilhaft, da die Handlingsvorrichtung durch die Transporteinheit und/oder das Transportsystem zu einer Wartungsposition bewegt werden kann.

Insbesondere kann vorgesehen sein, dass die Bewegbarkeit der Handlingsvorrichtung durch die wenigstens eine Transporteinheit realisiert ist. Somit kann die Transporteinheit die Handlingsvorrichtung bewegen und separat oder gleichzeitig den Abstand der wenigstens zwei Gegenstandsaufnahmen verändern, wodurch Prozesse synchronisiert werden können, was die Handlingsvorrichtung verbessert.

Bei einer vorteilhaften Ausgestaltung der Erfindung kann vorgesehen sein, dass die Verstelleinrichtung ein Getriebe hat, mit dem die Bewegung der wenigstens einen Transporteinheit in eine Veränderung des Abstandes umsetzbar ist. Somit kann eine Handlingsvorrichtung verbessert werden, da die Veränderung des Abstandes schnell und ohne Verzögerung durch die Bewegung der Transporteinheit realisiert werden kann. Weiterhin von Vorteil ist, dass ein Getriebe nicht nur eine Abstandsänderung bewirken kann, sondern auch eine Veränderung der vertikalen Position und/oder einer Ausrichtung der Gegenstandsaufnahmen umsetzen kann. Hierdurch kann der Anwendungsbereich einer Handlingsvorrichtung erweitert und an Kundenwünsche angepasst werden.

Insbesondere kann ein Getriebe mit einem Scherenmechanismus ausgebildet sein, wodurch die Bewegung der wenigstens einen Transporteinheit in eine Veränderung des Abstandes umsetzbar ist. Dabei kann der Scherenmechanismus kostengünstig realisiert sein, vor allem wenn die gesamte Verstelleinrichtung mechanisch ausgebildet ist.

Bei einer weiteren vorteilhaften Ausgestaltung der Erfindung kann vorgesehen sein, dass die Veränderung des Abstandes stufenlos umsetzbar ist. Hierdurch kann vorteilhaft der Abstand stufenlos verändert werden, wodurch eine größere Bandbreite an Prozessstationen mit verschiedenen Prozessabständen durch die gleiche Handlingsvorrichtung angesteuert werden kann. Somit kann die Anzahl an Handlingsvorrichtungen innerhalb einer Produktionslinie verringert werden, was platz- und geldsparend ist, insbesondere, wenn die Handlingsvorrichtung bewegbar ist.

Beispielsweise kann eine Handlingsvorrichtung Gefäße zum Befüllen zu einer Befüllstation transportieren, wobei die Handlingsvorrichtung einen bestimmten Abstand zwischen den Gefäßen generiert, der von der Ausbildung der Befüllstation abhängig ist. Nach erfolgtem Befüllen der Gefäße kann die gleiche Handlingsvorrichtung eine Bewegung zu einer weiterführenden Prozessstation vollziehen, wobei eine stufenlose Abstandsänderung zwischen den befüllten Gefäßen umgesetzt wird, welche sich an den Prozessabstand der weiterführenden Prozessstation anpasst. Als Prozessabstand ist der Abstand zwischen wenigstens zwei Gegenstandsaufnahmen und/oder darin aufgenommenen Gefäßen gemeint, den eine Prozessstation zur Ausführung des Prozesses benötigt.

Bei einer weiteren vorteilhaften Ausgestaltung der Erfindung kann vorgesehen sein, dass der Abstand zwischen den wenigstens zwei Gegenstandsaufnahmen gleichbleibend veränderbar ist. Hierdurch kann sichergestellt werden, dass ein Prozessabstand für die wenigstens zwei Gegenstandsaufnahmen realisiert werden kann, wodurch ein Prozess gleichmäßig und gleichzeitig für alle auf der Handlingsvorrichtung befindlichen Gegenstände durchführbar sein kann.

Alternativ oder zusätzlich kann vorgesehen sein, dass sich der Abstand zwischen den wenigstens zwei Gegenstandsaufnahmen in einem definierten Verhältnis verändert. Somit kann sehr vorteilhaft der Abstand einer Handlingsvorrichtung veränderbar und oder steuerbar sein, wodurch die Handlingsvorrichtung noch variabler einsetzbar sein kann.

Beispielsweise kann ein Abstand definiert einheitlich oder uneinheitlich zwischen wenigstens zwei Gegenstandsaufnahmen verändert werden. Eine einheitliche und uneinheitliche Abstandsänderung kann auch simultan ausführbar sein, wenn die Handlingsvorrichtung wenigstens drei Gegenstandsaufnahmen aufweist.

Bei einer weiteren vorteilhaften Ausgestaltung der Erfindung kann vorgesehen sein, dass die Verstelleinrichtung gelenkig mit der wenigstens einen Transporteinheit verbunden ist. Eine solche Ausgestaltung ist besonders vorteilhaft, wenn die Handlingsvorrichtung bewegbar ist, da ein gelenkiger Verbund die Bewegungsgrade der Handlingsvorrichtung erweitert. Auch kann vorteilhaft sein, dass sich durch eine gelenkige Verbindung die Ausrichtung der Transporteinheit zur Verstelleinrichtung ändert, wodurch die Transporteinheit flexibler eingesetzt werden kann.

Bei einer vorteilhaften Ausgestaltung der Erfindung kann vorgesehen sein, dass die Verstelleinrichtung vorzugsweise gelenkig mit einer weiteren, vorzugsweise gleich ausgebildeten Transporteinheit verbunden ist. Hierdurch können die Bewegungsgrade der Handlingsvorrichtung weiter verbessert werden, sodass ein flüssiger Bewegungsablauf realisierbar ist.

Beispielsweise können die beiden vorzugsweise gelenkig miteinander verbundenen Transporteinheiten als zwei Mover ausgebildet sein, wodurch ein flüssiger Bewegungsablauf der Handlingsvorrichtung verwirklichbar sein kann. Es kann aber auch eine erste Transporteinheit als Mover und eine zweite Transporteinheit als Transportwagen ausgebildet sein. Somit kann die Wahl der Transporteinheiten beziehungsweise des Transportsystems flexibel ausgestaltet und an einen Prozessraum angepasst werden.

Insbesondere kann dabei vorgesehen sein, dass die Betätigung der Verstelleinrichtung durch eine Relativbewegung der wenigstens einen Transporteinheit gegen die weitere Transporteinheit ausführbar ist. Vorteilhaft ist hierbei, dass die Bewegungsenergie direkt in eine Abstandsänderung der wenigstens zwei Gegenstandsaufnahmen übertragen werden kann, wodurch eine Bewegung der Handlingsvorrichtung mit der Abstandsänderung synchronisierbar ist. Somit können Prozesse beschleunigt werden.

Bei einer vorteilhaften Ausgestaltung der Erfindung kann vorgesehen sein, dass die Verstelleinrichtung vorzugsweise gelenkig mit einem festen Punkt verbunden ist. Ein fester Punkt kann als ein Abschnitt einer Wand, einer Decke, eines Bodens, einer Säule oder einer Prozessstation ausgebildet sein. Somit kann die Verstelleinrichtung beweglich an einen festen Punkt verankert werden.

Insbesondere kann dabei vorgesehen sein, dass die Betätigung der Verstelleinrichtung durch eine Relativbewegung der wenigstens einen Transporteinheit gegen den festen Punkt ausführbar ist. Somit kann sich vorteilhaft die Verstelleinrichtung und/oder die Handlingsvorrichtung in einem bestimmten Radius von oder zu dem festen Punkt bewegen, wodurch ein Raum einer Prozessvorrichtung optimal ausgenutzt werden kann, besonders, wenn die Verstelleinrichtung sich um den festen Punkt, wie zuvor beschrieben oder nachfolgend beansprucht, bewegen kann.

Bei einer weiteren vorteilhaften Ausgestaltung der Erfindung kann vorgesehen sein, dass wenigstens eine Gegenstandsaufnahme ein Transportgut, beispielsweise Vials und/oder Spritzen und/oder Karpullen und/oder Ampullen, aufnehmen kann. Somit kann die Bearbeitung des soeben beschrieben Transportguts durch eine Handlingsvorrichtung, insbesondere wie zuvor beschrieben oder ach einem der auf eine Handlingsvorrichtung gerichteten Ansprüche, verbessert werden.

Alternativ oder zusätzlich sind zur Lösung der genannten Aufgabe erfindungsgemäß die Merkmale des nebengeordneten, auf eine Verwendung gerichteten Anspruchs vorgesehen. Insbesondere wird somit zur Lösung der genannten Aufgabe bei einer Verwendung der eingangs beschriebenen Art erfindungsgemäß vorgeschlagen, dass Transporteinheit zur Veränderung eines Abstandes zwischen wenigstens zwei auf einer Handlingsvorrichtung gehaltenen Gegenstände verwendet wird. Insbesondere ist vorgesehen, dass eine Handlingsvorrichtung wie nachfolgend beansprucht, zur Abstandsveränderung verwendet wird. Die erfindungsgemäße Verwendung einer Transporteinheit zur Veränderung eines Abstandes zwischen wenigstens zwei auf einer Handlingsvorrichtung gehaltenen Gegenstände anstatt sonst üblicher motorbetriebener Abstandsveränderungen ermöglicht ein variableres und verbessertes Handling, insbesondere in Reinräumen wie zuvor beschrieben.

Bei einer weiteren vorteilhaften Verwendung der Erfindung kann vorgesehen sein, dass in einem ersten Durchlauf wenigstens zwei Gegenstände in einem ersten Abstand zueinander zugeführt und in einem zweiten Abstand zueinander abgeführt werden und wobei in einem zweiten Durchlauf wenigstens zwei Gegenstände in einem dritten Abstand zueinander zugeführt und in einem vierten Abstand zueinander abgeführt werden, wobei der erste und der dritte Abstand und/oder der zweite und der vierte Abstand voneinander verschieden sind. Somit kann vorteilhaft eine stufenlose Abstandsänderung in einem fortlaufenden Prozess umgesetzt werden.

Die Erfindung wird nun anhand von Ausführungsbeispielen näher beschrieben, ist jedoch nicht auf die Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Fig. 1: eine erste erfindungsgemäße Handlingsvorrichtung mit zwei Movern als Transporteinheiten,
- Fig. 2: eine zweite erfindungsgemäße Handlingsvorrichtung, wobei die Verstelleinrichtung gelenkig mit einem festen Punkt verbunden ist,
- Fig. 3: eine dritte erfindungsgemäße Handlingsvorrichtung mit zwei Transportwagen als Transporteinheiten,
- Fig. 4: eine vierte erfindungsgemäße Handlingsvorrichtung mit stationären und beweglichen Transporteinheiten,
- Fig. 5: einen Scherenmechanismus eines Getriebes,
- Fig. 6: eine alternative erfindungsgemäße Handlingsvorrichtung mit einem Zahnradgetriebe,
- Fig. 7: eine alternative erfindungsgemäße Handlingsvorrichtung mit einem schienenbetriebenen Getriebe,
- Fig. 8: eine alternative erfindungsgemäße Handlingsvorrichtung, die zu einem festen Punkt fahrbar ist,
- Fig. 9: eine alternative erfindungsgemäße Handlingsvorrichtung mit einem elastischen Getriebe,
- Fig. 10: eine alternative erfindungsgemäße Handlingsvorrichtung mit einem weiteren alternativen Getriebe.

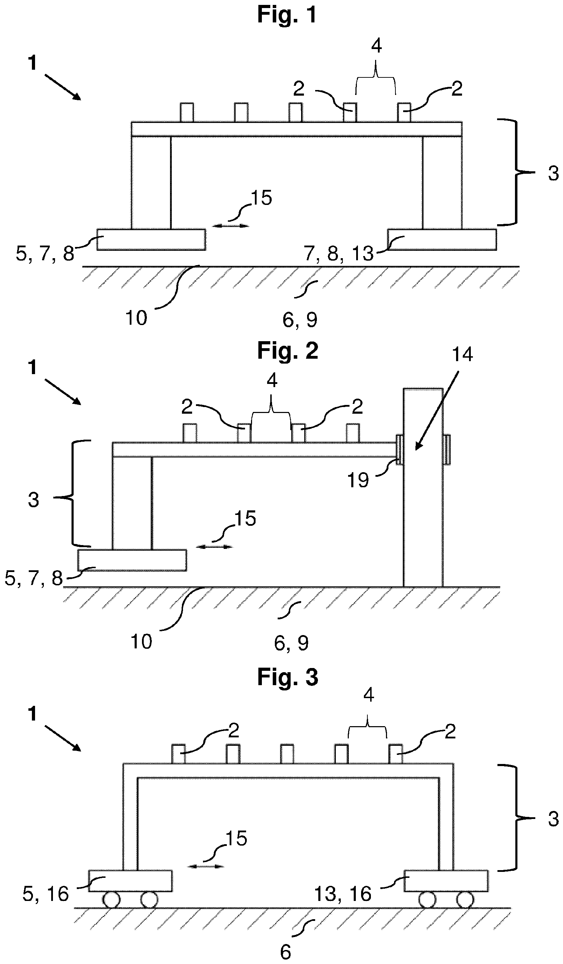

In Fig. 1 ist eine erste erfindungsgemäße Handlingsvorrichtung 1 abgebildet, welche fünf Gegenstandsaufnahmen 2 aufweist. Die Anzahl der Gegenstandsaufnahmen 2 kann bei erfindungsgemäßen Handlingsvorrichtungen 1 variieren, wobei insbesondere vier oder acht Gegenstandsaufnahmen 2 in der Praxis Verwendung finden können.

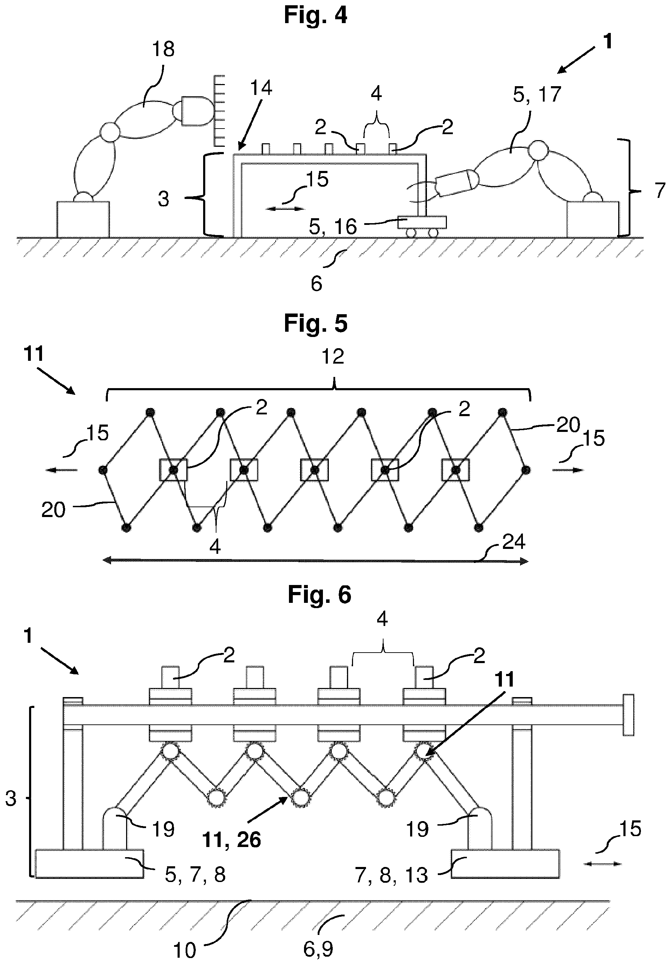

Die Gegenstandsaufnahmen 2 sind mit einer Verstelleinrichtung 3 verbunden, sodass sich ein Abstand 4 zwischen den Gegenstandsaufnahmen 2 verändern kann. Die Veränderung des Abstandes 4 erfolgt im Falle der in Fig. 1 dargestellten Handlingsvorrichtung 1 durch eine Relativbewegung 15 zweier dauerhaft an die Verstelleinrichtung 3 kontaktierter Transporteinheiten 5, 13. Bei einer alternativen Ausführungsform können die Transporteinheiten 5, 13 auch lösbar an der Verstelleinrichtung 3 angreifen. Die hier gezeigten Transporteinheiten 5, 13 sind Mover 8 eines Transportsystems 7, die magnetisch an eine Statoranordnung 9 gekoppelt sind und reibungslos über eine Antriebsfläche 10 schweben. Hierbei ist die Statoranordnung 9 in einen Boden 6 integriert. Des Weiteren sind die beiden Mover 8 über ein Gelenk 19, analog zu den in Fig. 6 gezeigten Mover 8, mit dem Getriebe 11 der Verstelleinrichtung 3 kraftschlüssig verbunden. Bei einer weiteren, nicht gezeigten Ausführungsform, kann die oder eine Statoranordnung 9 zusätzlich oder alternativ auch an eine Wand und/oder Decke integriert sein. Derartige Mover-Statoranordnungen könnten beispielsweise in Reinräumen verwendet werden, um Gegenstände wie beispielsweise Vials und/oder Spritzen und/oder Karpullen und/oder Ampullen wie auf einer Handlingsvorrichtung 1 zu prozessieren und/ oder zu transportieren.

Generell ist zu sagen, dass Transporteinheiten 5 und/oder Transportsysteme 7 auch Transportwagen 16 (Fig. 3, Fig. 4), Greifarme 17 (Fig. 4) oder andere dem Fachmann bekannte Transportvorrichtungen beinhalten können.

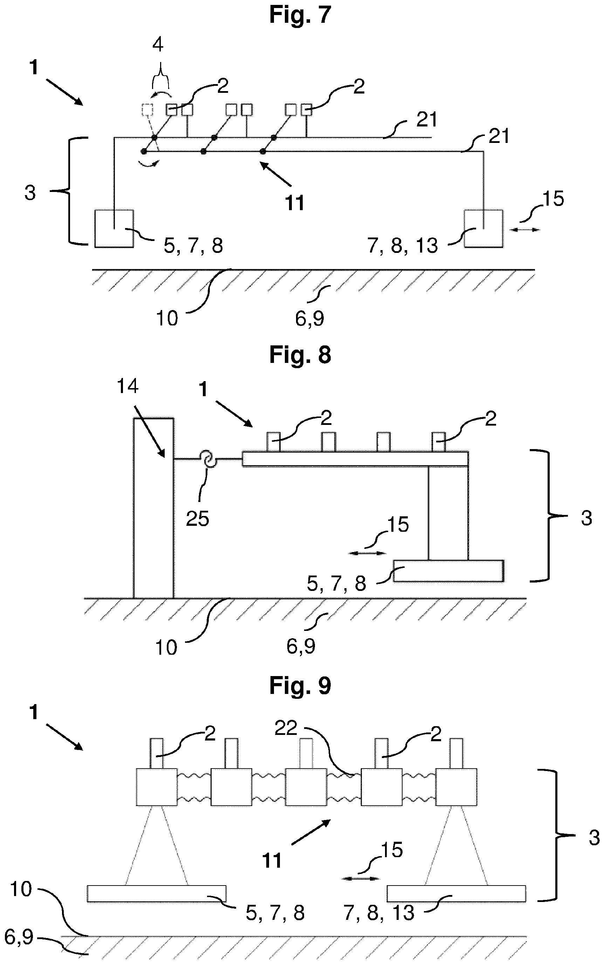

Die durch die Relativbewegung 15 der Mover 8 (Fig. 1) erzeugte kinetische Energie wird so auf die Verstelleinrichtung 3 übertragen, dass es zu der zuvor besagten Veränderung des Abstands 4 der auf der Verstelleinrichtung 3 befindlichen Gegenstandsaufnahmen 2 kommt. In den Fig. 2 und Fig. 8 dargestellten Handlingsvorrichtungen 1 erfolgt die Veränderung des Abstands 4 durch eine Relativbewegung 15 zwischen einer Transporteinheit 5 und einem festen Punkt 14.

Fig. 4 zeigt eine weitere Ausführungsform, bei der eine Transporteinheit 5 als Greifarm 17 ausgebildet ist. Der Greifarm 17 greift kurzeitig oder wiederholend an der Verstelleinrichtung 3 an, wodurch eine Relativbewegung 15 eines passiven Transportwagens 16, welcher fest an die Verstelleinrichtung 3 kontaktiert ist, angeregt wird. In Abhängigkeit von einem Abstand 4 kann eine Prozessstation 18 die aufgenommenen Gegenstände bearbeiten. Der Greifarm 17 kann neben seiner Funktion als Transporteinheit 5 auch noch weitere Prozesse durchführen.

Es ist auch denkbar, dass sich die Handlingsvorrichtung 1 von einem Ort zu einem anderen bewegen kann. Dies ist beispielsweise durch Handlingsvorrichtungen 1 umsetzbar, deren Verstelleinrichtung 3 nicht dauerhaft an einen festen Punkt 14 fixiert ist. Ortsveränderbare Handlingsvorrichtungen 1 sind in den Figuren 1, 3, und in den Figuren 6 bis 10 dargestellt. Bei der Bewegung der Handlingsvorrichtung 1 von einem Ort zu einem anderen kann es ebenso zu einer Änderung des Abstandes 4 kommen. Beide soeben beschriebenen Bewegungsprozesse können direkt aufeinander abgestimmt sein, jedoch ist auch denkbar, dass bei ortsveränderbaren Handlingsvorrichtungen 1 sich eine Änderung des Abstandes 4 erst kurz vor einer und/oder direkt an einer Zielposition einstellt. Eine Änderung des Abstandes 4 kann immer auch mit einer Veränderung der Längsausdehnung 24 (Vergleiche Fig. 5) einhergehen. Dabei kann eine Zielposition eine Prozessposition, Wartungsposition oder Ruheposition sein.

Fig. 2 zeigt eine Handlingsvorrichtung 1, deren Verstelleinrichtung 3 über ein Gelenk 19 an einen festen Punkt 14 befestigt ist. Die Handlingsvorrichtung 1 kann sich durch den Mover 8 relativ zu dem festen Punkt 14 und/ oder bis zu 360° um den festen Punkt 14 herum bewegen. Somit wird optimal ein Raum um einen festen Punkt 14 herum durch die Handlingsvorrichtung 1 ausgenutzt. Es ist auch denkbar, dass eine Handlingsvorrichtung 1 ortsveränderbar ist und an einen festen Punkt 14 über eine Kopplung 25 verankert werden kann (Fig. 8).

Alternativ oder zusätzlich zu den an die Handlingsvorrichtung 1 dauerhaft gekoppelten Transporteinheiten 5, 13 ist es möglich, dass eine Transporteinheit 5 die Handlingsvorrichtung 1 anfahren kann, sodass es zu einem kurzen und/ oder wiederholten Angreifen der Transporteinheit 5 an die Verstelleinrichtung 3 kommt (siehe zum Beispiel Fig. 2). Dadurch kann eine Änderung des Abstandes 4 angeregt werden. Eine derartige Transporteinheit 5 könnte somit frei bewegbar von der Handlingsvorrichtung 1 realisiert sein.

Die Verstelleinrichtung 3 der in den Figuren 1 bis 4 gezeigten Handlingsvorrichtungen 1 hat ein Getriebe 11, welches als Scherenmechanismus 12 ausgebildet ist. Ein derartiges Getriebe 11 ist in Fig. 5 dargestellt. Durch die durch eine Relativbewegung 15 der wenigstens einen Transporteinheit 5 übertragene kinetische Energie können sich die Scheren 20 öffnen oder schließen, wodurch es zu einer Veränderung des Abstandes 4 der Gegenstandsaufnahmen 2 und zu einer Veränderung der Längsausdehnung 24 der Verstelleinrichtung 3 kommt. Durch einen Scherenmechanismus 12 ist es möglich eine stufenlose Veränderung des Abstandes 4 zu erwirken. Wie schon beschrieben kann die Abstandsänderung infolge und/oder während einer ortsveränderbaren Bewegung einer Handlingsvorrichtung 1 vollzogen werden.

Ein alternatives Getriebe 11 ist in Fig. 6 offenbart. Das darin gezeigte Getriebe 11 ist ein Zahnradgetriebe 26, welches eine Veränderung des Abstandes 4 der Gegenstandsaufnahmen 2 aufgrund einer Relativbewegung 15 der Mover 8 hervorruft. Die beiden Mover 8 sind gelenkig mit dem Zahnradgetriebe 26 verbunden. Alternativ kann auch nur einer der Mover 8 mit dem Zahnradgetriebe 26 gelenkig verbunden sein.

Ein weiteres alternatives Getriebe 11 ist in Fig. 7 offenbart. Dabei ist jeweils einer der Mover 8 bzw. Transporteinheiten 5, 13 mit einer Schiene 21 verbunden, wobei die Schienen 21 selbst gelenkig miteinander in Verbindung stehen. Durch eine Relativbewegung 15 der Mover 8 bzw. der Transporteinheiten 5, 13 verändert sich die Position der beiden Schienen 21 relativ und somit auch der Abstand 4 der Gegenstandsaufnahmen 2.

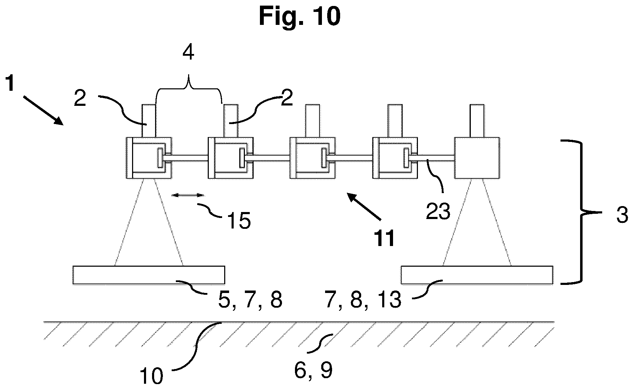

Weitere alternative Getriebe 11 sind in den Figuren 9 und 10 offenbart, wobei beispielsweise die Veränderung des Abstandes 4 mittels elastischer Verbindungselemente 22 zwischen den Gegenstandsaufnahmen 2 erreicht werden kann (Fig. 9). In der Fig. 10 gezeigten Ausführungsform sind die Gegenstandsaufnahmen 2 durch starre Verbindungselemente 23 verbunden, wobei ein starres Verbindungselement 23 einer Gegenstandsaufnahme 2 sich während der Relativbewegung 15 der Transporteinheiten 5, 13 sich relativ innerhalb einer benachbarten Gegenstandsaufnahme 2 bewegt, sodass es zu einer Veränderung des Abstandes 4 kommt. Weitere dem Fachmann bekannte Getriebe 11 können ebenso zur Veränderung eines Abstandes 4 Verwendung finden, sodass die hier dargestellten Getriebe 11 nicht abschließend sind.

Die Erfindung schlägt allgemein eine Handlingsvorrichtung 1 vor, welche wenigstens zwei Gegenstandsaufnahmen 2 und wenigstens eine Verstelleinrichtung 3, mit der ein Abstand 4 zwischen den wenigstens zwei Gegenstandsaufnahmen 2 veränderbar ist, aufweist, wobei wenigstens eine Transporteinheit 5 an der Verstelleinrichtung 3 angreift, sodass der Abstand 4 zwischen den wenigstens zwei Gegenstandsaufnahmen 2 durch eine Bewegung der Transporteinheit 5 veränderbar ist.

### Bezugszeichenliste

- 1: Handlingsvorrichtung
- 2: Gegenstandsaufnahme
- 3: Verstelleinrichtung
- 4: Abstand
- 5: Transporteinheit
- 6: Boden
- 7: Transportsystem
- 8: Mover
- 9: Statoranordnung
- 10: Antriebsfläche
- 11: Getriebe
- 12: Scherenmechanismus
- 13: Transporteinheit
- 14: fester Punkt
- 15: Relativbewegung
- 16: Transportwagen
- 17: Greifarm
- 18: Prozessstation
- 19: Gelenk
- 20: Schere
- 21: Schiene
- 22: elastisches Verbindungselement
- 23: starres Verbindungselement
- 24: Längsausdehnung
- 25: Kopplung
- 26: Zahnradgetriebe

## Patentansprüche

1. Handlingsvorrichtung (1) aufweisend wenigstens zwei Gegenstandsaufnahmen (2) und wenigstens eine Verstelleinrichtung (3), mit der ein Abstand (4) zwischen den wenigstens zwei Gegenstandsaufnahmen (2) veränderbar ist, **dadurch gekennzeichnet, dass** wenigstens eine Transporteinheit (5) an der Verstelleinrichtung (3) angreift, sodass der Abstand (4) zwischen den wenigstens zwei Gegenstandsaufnahmen (2) durch eine Bewegung der Transporteinheit (5) veränderbar ist.

2. Handlingsvorrichtung (1) nach Anspruch 1, **dadurch gekennzeichnet, dass** die Verstelleinrichtung (3) mechanisch ist und/ oder dass die Verstelleinrichtung (3) während des Verstellens eines Abstands (4) ihre Längsausdehnung(24) verändert.

3. Handlingsvorrichtung (1) nach einem der vorangegangenen Ansprüche, **dadurch gekennzeichnet, dass** die wenigstens eine Transporteinheit (5) Teil der Handlingsvorrichtung (1) und/oder Teil eines Transportsystems (6) ist.

4. Handlingsvorrichtung (1) nach einem der vorangegangenen Ansprüche, **dadurch gekennzeichnet, dass** die wenigstens eine Transporteinheit (5) passiv oder aktiv ausgebildet ist.

5. Handlingsvorrichtung (1) nach einem der vorangegangenen Ansprüche, **dadurch gekennzeichnet, dass** die wenigstens eine Transporteinheit (5) ein Mover (8) ist, der magnetisch an einer Statoranordnung (9) gekoppelt und/oder in wenigstens einem Freiheitsgrad oder wenigstens zwei Freiheitsgraden auf einer Antriebsfläche (10) bewegbar ist.

6. Handlingsvorrichtung (1) nach einem der vorangegangenen Ansprüche, **dadurch gekennzeichnet, dass** die Handlingsvorrichtung (1) bewegbar ist, insbesondere, dass die Bewegbarkeit der Handlingsvorrichtung (1) durch die wenigstens eine Transporteinheit (5) realisiert ist.

7. Handlingsvorrichtung (1) nach einem der vorangegangenen Ansprüche, **dadurch gekennzeichnet, dass** die Verstelleinrichtung (3) ein Getriebe (11), insbesondere mit einem Scherenmechanismus (12), hat, mit dem die Bewegung der wenigstens einen Transporteinheit (5) in eine Veränderung des Abstandes (4) umsetzbar ist.

8. Handlingsvorrichtung (1) nach einem der vorangegangen Ansprüche, **dadurch gekennzeichnet, dass** die Veränderung des Abstandes (4) stufenlos umsetzbar ist.

9. Handlingsvorrichtung (1) nach einem der vorangegangen Ansprüche, **dadurch gekennzeichnet, dass** der Abstand (4) zwischen den wenigstens zwei Gegenstandsaufnahmen (2) gleichbleibend veränderbar ist und/ oder sich in einem definierten Verhältnis verändert.

10. Handlingsvorrichtung (1) nach einem der vorangegangen Ansprüche, **dadurch gekennzeichnet, dass** die Verstelleinrichtung (3) gelenkig mit der wenigstens einen Transporteinheit (5) verbunden ist.

11. Handlingsvorrichtung (1) nach einem der vorangegangen Ansprüche, **dadurch gekennzeichnet, dass** die Verstelleinrichtung (3) vorzugsweise gelenkig mit einer weiteren, vorzugsweise gleich ausgebildeten Transporteinheit (13) verbunden ist, insbesondere sodass die Betätigung der Verstelleinrichtung (3) durch eine Relativbewegung (15) der wenigstens einen Transporteinheit (5) gegen die weitere Transporteinheit (13) ausführbar ist.

12. Handlingsvorrichtung (1) nach einem der vorangegangen Ansprüche, **dadurch gekennzeichnet, dass** die Verstelleinrichtung (3) vorzugsweise gelenkig mit einem festen Punkt (14) verbunden ist, insbesondere sodass die Betätigung der Verstelleinrichtung (3) durch eine Relativbewegung (15) der wenigstens einen Transporteinheit (5) gegen den festen Punkt (14) ausführbar ist.

13. Handlingsvorrichtung (1) nach einem der vorangegangen Ansprüche, **dadurch gekennzeichnet, dass** wenigstens eine Gegenstandsaufnahme (2) ein Transportgut, beispielsweise Vials und/oder Spritzen und/oder Karpullen und/oder Ampullen, aufnehmen kann.

14. Verwendung einer Transporteinheit (5) zur Veränderung eines Abstandes (4) zwischen wenigstens zwei auf einer Handlingsvorrichtung (1), insbesondere einer Handlingsvorrichtung (1) gemäß einem der Ansprüche 1 bis 13, gehaltenen Gegenstände.

15. Verwendung nach Anspruch 14, wobei in einem ersten Durchlauf wenigstens zwei Gegenstände in einem ersten Abstand (4) zueinander zugeführt und in einem zweiten Abstand (4) zueinander abgeführt werden und wobei in einem zweiten Durchlauf wenigstens zwei Gegenstände in einem dritten Abstand (4) zueinander zugeführt und in einem vierten Abstand (4) zueinander abgeführt werden, wobei der erste und der dritte Abstand (4) und/oder der zweite und der vierte Abstand (4) voneinander verschieden sind.
